# EUROPEAN PATENT APPLICATION

(11) **EP 2 270 321 A1**
(43) Date of publication of application: **05.01.2011**
(21) Application number: 09724970.0
(22) Date of filing: 18.03.2009
(51) Int. Cl.: F01P 7/04, E02F 9/00, F04D 27/00, F15B 21/04

(54) **FAN DRIVE CONTROLLING DEVICE AND CONSTRUCTION MACHINE**

(30) Priority: 25.03.2008 JP 2008078237
(71) Applicant: Komatsu Ltd., Minato-ku Tokyo 107-8414 (JP)
(72) Inventor: TANAKA, Satoshi, Mooka-shi Tochigi 321-4346 (JP); HAGIWARA, Kizuki, Mooka-shi Tochigi 321-4346 (JP)
(74) Representative: Grünecker, Kinkeldey, Stockmair & Schwanhäusser Anwaltssozietät
(86) International application number: PCT/JP2009/055283
(87) International publication number: WO 2009/119407

(57) **Abstract**

A fan drive control device includes: a hydraulic motor driving a cooling fan by a hydraulic oil supplied from a hydraulic pump driven by an engine; a flow rate adjuster adjusting a flow rate of the hydraulic oil flowed into the hydraulic motor; a temperature sensor detecting a temperature of a fluid cooled by a cooling fan; an accelerator pedal angle sensor detecting an accelerator pedal angle for controlling an engine power based on a detected value by the temperature sensor; a target flow rate setting unit setting a target flow rate of the hydraulic oil flowed into the hydraulic motor; a target flow rate compensation unit compensating the target flow rate based on a detected value by the accelerator pedal angle sensor; and a control command generator generating a control command to the flow rate adjuster according to the target flow rate by the target flow rate compensation unit.

## Description

### Technical Field

The present invention relates to a fan drive control device and a construction machine.

### Background Art

In a construction machine such as a dump truck, a wheel loader and a bulldozer, an engine and the like are cooled by circulating a cooling-water for an engine, a hydraulic oil for a torque converter and the like through a radiator or an oil cooler and sending outer air to the radiator and the like by a cooling fan. In such a construction machine, the cooling fan is generally driven by a hydraulic motor. There has been recently known a hydraulic motor that consecutively and variably controls a rotation speed of the fan in accordance with a temperature of the cooling-water, a temperature of a hydraulic oil used for the torque converter, a brake and the like and a rotation speed of the engine (see, for instance, Patent Document 1).

Specifically, a target rotation speed of the fan and a target flow rate to the hydraulic motor driving the fan are set based on the temperatures of the cooling-water and the hydraulic oil to be cooled. Then, a discharge rate of a hydraulic pump that supplies the hydraulic oil to the hydraulic motor is adjusted so as to realize the set target conditions. Thus, by consecutively changing the rotation speed of the fan so as to suitably adjust the temperatures of the fluids to be cooled, the engine and the like are prevented from overheat.

Patent Document 1 JP-A-2000-110779

### Disclosure of the Invention

### Problem to be Solved by the Invention

However, in the fan control of Patent Document 1, the rotation speed of the fan is basically controlled in accordance with the temperatures of the fluids to be cooled, but an engine load is not taken into consideration. In Patent Document 1, in view of an operational volume of a control lever for operating a working equipment, such a control as to forcibly lower the rotation speed of the fan only for a short time is taken, which only prevents decrease in working efficiency of the working equipment. Accordingly, irrespective of an operator's intention on travelling and road surface conditions in travelling, a hydraulic motor is driven at a high rotation speed depending on a temperature of a fluid to be cooled, thereby consuming an engine power. Consequently, even when an engine driving force needs to be transmitted to the road surface at a maximum level in travelling, for instance, on a soft ground, the engine power is consumed for driving the fan, thereby lowering travelling performance.

On the other hand, when an accelerator pedal is off as in driving down a hill, acceleration is not required at all, but deceleration is rather required depending on conditions. Accordingly, decrease in acceleration performance is not against the operator's intention. Here, it is considered to actively cool an engine by increasing the rotation speed of the fan. However, in Patent Document 1, since the rotation of the fan is controlled in accordance with the temperatures of the fluids to be cooled, the rotation speed of the fan cannot be actively increased even in such a case. Accordingly, an efficient cooling cannot be performed.

It is considered, for instance, to judge the road surface conditions during travelling the soft ground and the hill, and to stop the fan drive during travelling on a specific road surface. However, it is difficult to judge the road surface conditions at a high accuracy and the travelling performance may be rather decreased by an erroneous judgment. Moreover, when the fan drive is stopped, a cooling performance is decreased, so that an efficient cooling cannot be performed.

An object of the present invention is to provide a fan drive control device and a construction machine provided with the fan drive control device.

### Means for Solving the Problems

A fan drive control device for controlling a drive of a cooling fan of a construction machine includes: a hydraulic motor that drives the cooling fan by a hydraulic oil supplied from a hydraulic pump driven by an engine; a flow rate adjuster that adjusts a flow rate of the hydraulic oil flowed into the hydraulic motor; a temperature sensor that detects a temperature of a fluid to be cooled by the cooling fan; an accelerator pedal angle sensor that detects an accelerator pedal angle for controlling a power of the engine; a target flow rate setting unit that sets a target flow rate of the hydraulic oil flowed into the hydraulic motor based on a detected value by the temperature sensor; a target flow rate compensation unit that compensates the target flow rate based on a detected value by the accelerator pedal angle sensor; and a control command generator that generates a control command to the flow rate adjuster in accordance with the target flow rate compensated by the target flow rate compensation unit.

The fan drive control device according to the aspect of the invention is provided with the target flow rate compensation unit that compensates the target flow rate of the hydraulic oil to the hydraulic motor for driving the cooling fan based on the detected value by the accelerator pedal angle sensor. With this arrangement, the target flow rate of the hydraulic motor is compensated based on the detected value by the accelerator pedal angle sensor, so that a rotation speed of the cooling fan is changed in accordance with the accelerator pedal angle. Under conditions where an engine driving force needs to be transmitted to a road at the maximum level, the accelerator pedal angle is increased by an operator. In other words, in view of the accelerator pedal angle, it can be accurately judged whether the conditions require acceleration for transmitting a large driving force to the road or not. Thus, by detecting the accelerator pedal angle and altering the target flow rate of the hydraulic motor in accordance with the accelerator pedal angle, a consumption volume of the engine power by the fan drive can be reduced. Alternatively, by increasing the target flow rate, cooling can be actively performed. Accordingly, a cooling can be efficiently performed by the fan with prevention of decrease in a travelling performance owing to the fan drive.

In the fan drive control device according to the aspect of the invention, it is desirable that the target flow rate compensation unit decreases the target flow rate when the accelerator pedal angle is larger than a predetermined value and increases the target flow rate when the accelerator pedal angle is smaller than the predetermined value.

The fan drive control device according to the aspect of the invention decreases the target flow rate of the hydraulic motor when the accelerator pedal angle is larger than the predetermined value and increases the target flow rate when the accelerator pedal angle is smaller than the predetermined value. Accordingly, by a simple method of decreasing or increasing the target flow rate of the hydraulic motor in accordance with the accelerator pedal angle, the consumption volume of the engine power by driving the fan can be reduced. Accordingly, increase in a production cost of an entirety of the fan drive control device is restrained.

It is desirable that the fan drive control device according to the aspect of the invention further includes an engine speed sensor that detects an engine speed; and a storage unit that stores a plurality of target flow rate gradients corresponding to a plurality of the temperatures, each of the target flow rate gradients being fixed at each of the temperatures and representing a ratio of the target flow rate to the engine speed, in which the target flow rate setting unit sets the target flow rate gradient based on the detected value by the temperature sensor and a stored value in the storage unit and sets the target flow rate based on the target flow rate gradient and a detected value by the engine speed sensor, and the target flow rate compensation unit compensates the target flow rate by compensating the target flow rate gradient.

The fan drive control device according to the aspect of the invention stores a plurality of the target flow rate gradients corresponding to a plurality of the temperatures, each of the target flow rate gradients being fixed at each of the temperature and representing a ratio of the target flow rate to the engine speed. The fan drive control device compensates the target flow rate of the hydraulic motor by compensating the target flow rate gradient. Since the rotation speed of the hydraulic motor is determined by the flow rate of the hydraulic oil flowed in the hydraulic motor, by keeping the ratio of the target flow rate to the engine speed fixed, the hydraulic motor has a fixed deceleration ratio to the engine speed. The compensated target flow rate gradient is fixed irrespective of the engine speed when the temperature is fixed. Accordingly, even when the engine speed is changed, an inflow rate of the hydraulic oil to the hydraulic motor does not need to be changed. Thus, since the flow rate adjuster for adjusting the flow rate of the hydraulic oil flowed to the hydraulic motor does not need to be frequently operated, durability of the flow rate adjuster can be improved.

It is desirable that the fan drive control device according to the aspect of the invention further includes a storage unit that stores a plurality of target flow rates corresponding to a plurality of temperatures, each of the target flow rates being fixed irrespective of the engine speed, in which the target flow rate setting unit sets the target flow rate based on the detected value by the temperature sensor and a stored value in the storage unit, and the target flow rate compensation unit compensates the target flow rates that are fixed at each of the temperatures.

The fan drive control device according to the aspect of the invention stores a plurality of the fixed target flow rates corresponding to a plurality of the temperatures irrespective of the engine speed and compensates the target flow rates to be fixed at each of the temperatures. Accordingly, it is not required to store the target flow rate gradient of the hydraulic motor in advance and to convert the target flow rate gradient into the target flow rate, so that the flow rate of the hydraulic oil flowed to the hydraulic motor can be adjusted with such a simple arrangement. Consequently, increase in the production cost of the entirety of the fan drive control device is restrained.

It is desirable that the fan drive control device according to the aspect of the invention further includes a vehicle speed sensor that detects a vehicle speed of the construction machine; and a compensation prevention unit that prevents a compensation of the target flow rates when the vehicle speed is equal to or lower than a predetermined value.

The fan drive control device according to the aspect of the invention prevents a compensation of the target flow rate when the vehicle speed is equal to or lower than a predetermined value. With this arrangement, the target flow rate is not subjected to compensation when the construction machine travels at a low speed or is stopped, thereby preventing increase in the rotation speed of the cooling fan. Accordingly, since increase in the consumption volume of the engine power owing to the fan drive in idling can be avoided, a fuel consumption ratio of the engine can be maintained at a favorable level.

In the fan drive control device according to the aspect of the invention, it is desirable that the hydraulic pump is a variable displacement pump, and the flow rate adjuster adjusts a flow rate of the hydraulic oil discharged from the hydraulic pump by altering a displacement of the hydraulic pump.

The fan drive control device according to the aspect of the invention alters the volume of the variable displacement hydraulic pump and adjusts the flow rate of the hydraulic oil discharged from the hydraulic pump. Accordingly, when the variable displacement hydraulic pump is used, the flow rate of the hydraulic oil flowed to the hydraulic motor can be adjusted only by altering the displacement of the hydraulic pump. Thus, another hydraulic equipment is not additionally required, so that prevention of decrease in travelling performance owing to the fan drive and an efficient cooling can be achieved by such a simple arrangement.

In the fan drive control device according to the aspect of the invention, it is desirable that the hydraulic pump is a fixed displacement pump, and the flow rate adjuster is provided with a flow control valve bypassing between a suction side and a discharge side of the hydraulic motor and adjusts a flow rate of the hydraulic oil bypassing the hydraulic motor.

The fan drive control device according to the aspect of the invention includes the fixed displacement hydraulic pump, in which the flow rate adjuster is provided with the flow control valve bypassing the suction side and the discharge side of the hydraulic motor and adjusts the flow rate of the hydraulic oil bypassing the hydraulic motor. Accordingly, even when the fixed displacement hydraulic pump is used, the flow rate of the hydraulic oil flowed to the hydraulic motor can be adjusted only by providing the flow control valve bypassing the hydraulic motor. Thus, the hydraulic pump does not need to be replaced by a variable displacement pump, so that decrease in travelling performance owing to the fan drive can be avoided with restraint in the production cost of the entirety of the fan drive control device.

A construction machine according to another aspect of the invention includes a cooling fan and the above-described fan drive control device of the invention.

According to the aspect of the invention, such a construction machine as to provide the above-mentioned advantages can be obtained.

### Brief Description of Drawings

Fig. 1 is a diagram showing an arrangement of a construction machine according to a first exemplary embodiment of the invention.
Fig. 2 is a control block diagram of a controller of a fan drive control device according to the first exemplary embodiment.
Fig. 3 is a graph for explaining advantages of the controller according to the first exemplary embodiment.
Fig. 4 is a flow chart showing control flow of the controller according to the first exemplary embodiment.
Fig. 5 is a graph for explaining the advantages of the controller according to the first exemplary embodiment.
Fig. 6 is another graph for explaining the advantages of the controller according to the first exemplary embodiment.
Fig. 7 is a diagram showing an arrangement of a construction machine according to a second exemplary embodiment of the invention.
Fig. 8 is a graph for explaining advantages of a controller according to a third exemplary embodiment.
Fig. 9 is a control block diagram of the controller according to the third exemplary embodiment.

### Explanation of Codes

1: dump truck (construction machine), 6: cooling-water temperature sensor (temperature sensor), 7: steering oil temperature sensor (temperature sensor), 8: torque converter oil temperature sensor (temperature sensor), 9: brake oil temperature sensor (temperature sensor), 10: engine speed sensor, 11: vehicle speed sensor, 12: accelerator pedal angle sensor, 42: fan pump (hydraulic pump), 43: fan motor (hydraulic motor), 46: flow control valve (flow rate adjuster), 51: storage unit, 54: target flow rate setting unit, 55: compensation prevention unit, 56: target flow rate compensation unit, 421: displacement altering section (flow rate adjuster), 422: regulator (flow rate adjuster).

### Best Mode for Carrying Out the Invention

Exemplary embodiment(s) of the invention will be described below with reference to the attached drawings. It should be noted that, in second and third exemplary embodiments as described below, the same reference numerals will be used for the components which are the same as those of a first exemplary embodiment, and the detailed description thereof will be omitted.

### First Exemplary Embodiment

### 1-1 Overall Arrangement of Dump Truck 1

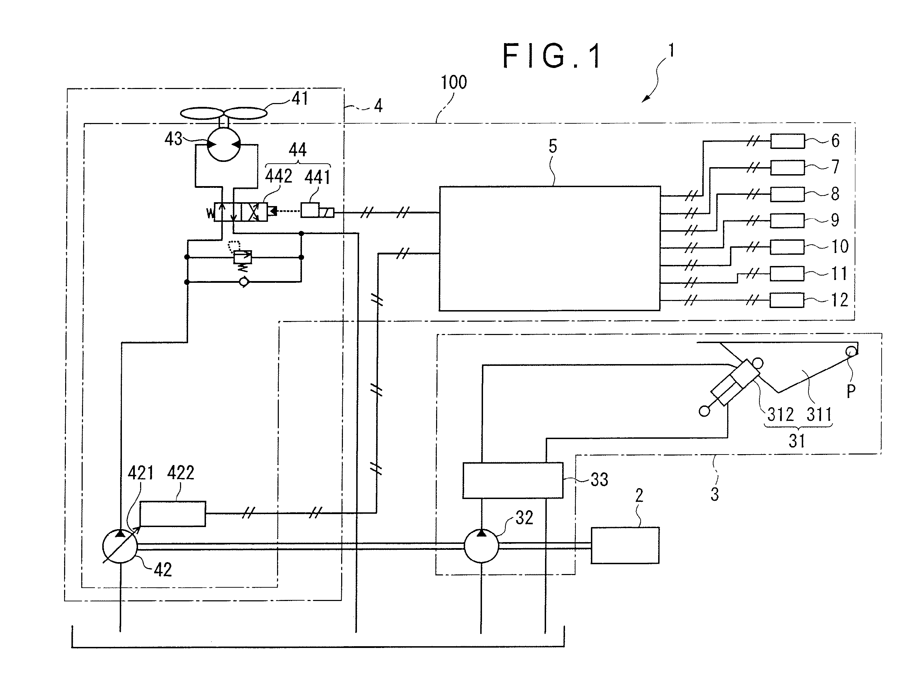

In Fig. 1 schematically showing an arrangement of a dump truck (construction machine) 1 according to a first exemplary embodiment of the invention, the dump truck 1 can be self-propelled with a travelling unit (not shown) driven by an engine 2 and includes a working equipment driver 3, a fan driver 4 and a controller 5.

The working equipment driver 3, which serves for operations such as unloading of soil, includes a working equipment 31, a working equipment pump 32 and a hoist valve 33. The working equipment 31 includes a body (which may be referred to as a hoist or a vessel) 311 and a hoist cylinder 312. The body 311, which is a truck bed for loading soil and the like, is supported by a shaft P in a manner to be vertically movable relative to a vehicle frame (not shown) of the dump truck 1. The body 311 and the vehicle frame are connected to each other with the hoist cylinder 312. Ends of the hoist cylinder 312 are rotatably supported by the body and the vehicle frame respectively. The hoist cylinder 312 is driven by a hydraulic oil supplied from the working equipment pump 32 and is extended and retracted by switching a valve position of the hoist valve 33. With extension and retraction of the hoist cylinder 312, the body 311 is vertically moved relative to the vehicle frame.

The fan driver 4, which serves for driving a cooling fan (hereinafter, simply referred to as a fan) 41, includes a fan pump (hydraulic pump) 42, a fan motor (hydraulic pump) 43 and a fan reverse control valve 44.
The fan pump 42 is a variable displacement hydraulic pump that is driven by the engine 2 serving as a power source and supplies the hydraulic oil to the fan motor 43. The fan pump 42 includes: a displacement altering section 421 such as a swash plate for altering a pump volume; and a regulator 422 such as a electromagnetic valve for driving the displacement altering section 421. The regulator 422 drives the displacement altering section 421 by a control command from the controller 5. The displacement altering section 421 alters the pump volume, whereby a discharge rate of the fan pump 42 is altered. The displacement altering section 421 and the regulator 422 constitute a flow rate adjuster of this exemplary embodiment.

The fan motor 43 is a hydraulic motor that is rotatable in forward and reverse directions, in which a flow rate of the hydraulic oil flowed to the fan motor 43 is altered in accordance with the discharge rate of the fan pump 42, thereby altering a rotation speed of the fan motor 43. The fan 41 is provided to an output shaft of the fan motor 43 and is rotationally driven by driving the fan motor 43.

A fan reverse control valve 44 is interposed between the fan motor 43 and the fan pump 42 and includes a fan reverse solenoid 441 and a direction switching valve 442. In the fan reverse control valve 44, when the fan reverse solenoid 441 is driven in accordance with the control command from the controller 5, a valve position of the direction switching valve 442 is switched to switch a rotation direction of the fan motor 43.

The controller 5 includes a CPU (Central Processing Unit) and the like and serves for controlling the drive of the fan 41. To an input side of the controller 5, a cooling-water temperature sensor 6, a steering oil temperature sensor 7, a torque converter oil temperature sensor 8, a brake oil temperature sensor 9, an engine speed sensor 10, a vehicle speed sensor 11 and an accelerator pedal angle sensor 12 are electrically connected. To an output side of the controller 5, the fan reverse solenoid 441 and the regulator 422 of the fan pump 42 are electrically connected. The controller 5 generates the control command and outputs it to the fan pump 42 and the fan reverse solenoid 441 based on temperature signals respectively from the temperature sensors 6 to 9, an engine speed signal from the engine speed sensor 10, a vehicle speed signal from the vehicle speed sensor 11 and an accelerator pedal angle signal from the accelerator pedal angle sensor 12.

In the dump truck 1 with the above structure, a fan drive control device 100 of this exemplary embodiment includes the controller 5, temperature sensors 6 to 9, the engine speed sensor 10, the vehicle speed sensor 11, the accelerator pedal angle sensor 12, the fan pump 42 and the fan motor 43. The controller 5 generates the control command based on temperatures of the cooling-water and the hydraulic oil to be cooled, the engine speed, a vehicle speed of the dump truck 1 and the accelerator pedal angle. The fan pump 42 alters the discharge rate according to the control command from the controller 5. Since the rotation speed of the fan motor 43 is altered in accordance with the discharge rate of the fan pump 42, the rotation speed of the fan 41 is controllable by altering the control command to the fan pump 42 by controller 5.

### 1-2 Control Structure of Controller 5 in Fan Drive Control Device 100

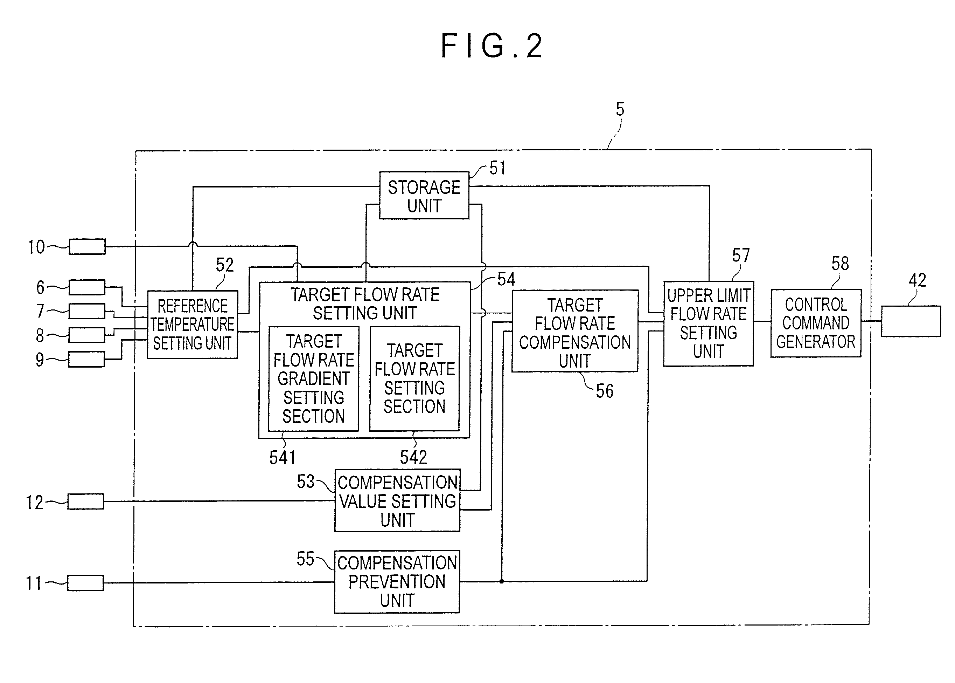

Next, a control structure of the controller 5 in the fan drive control device 100 will be explained with reference to Fig. 2.
As shown in Fig. 2, the controller 5 includes a storage unit 51, a reference temperature selector 52, a compensation value setting unit 53, a target flow rate setting unit 54, a compensation prevention unit 55, a target flow rate compensation unit 56, an upper limit flow rate setting unit 57, and a control command generator 58.

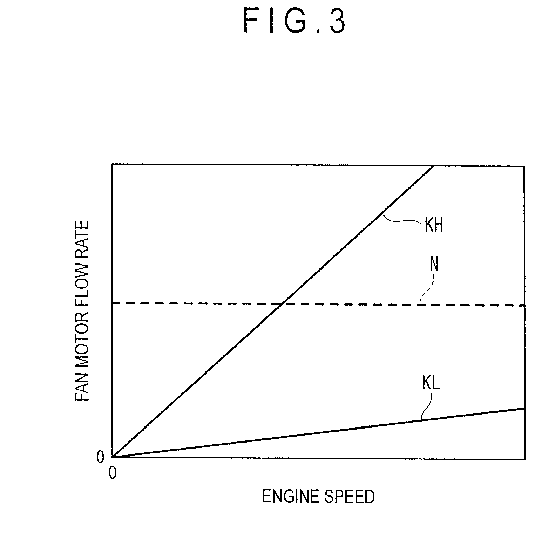

The storage unit 51 stores a target flow rate gradient map, an upper limit flow rate data table, a temperature conversion data table and a compensation value data table. As shown in Fig. 3, in the target flow rate gradient map, a target flow rate gradient, which is a ratio of the flow rate to the fan motor 43 relative to the engine speed, is associated with a temperature of a fluid to be cooled. In this exemplary embodiment, a target flow rate gradient KL at lower temperatures and a target flow rate gradient KH at higher temperatures, which each have a fixed gradient at each of the temperatures of the fluid to be cooled, are stored as the target flow rate gradient map. By setting the target flow rate based on the target flow rate gradients KL and KH, the fan motor 43 exhibits a fixed deceleration ratio to the engine speed at every temperature of the fluid to be cooled. In other words, the target flow rate gradient map corresponds to a map storing the deceleration ratio of the fan motor 43 to the engine speed in relation to the temperature of the fluid to be cooled.

In the upper limit flow rate data table, an upper limit flow rate relative to the target flow rate of the fan motor 43 is associated with an accelerator pedal angle. The upper limit flow rate data table stores a plurality of the upper limit flow rates including a reference upper limit flow rate N that serves as a reference of the upper limit of the target flow rate.
In the temperature conversion data table, hydraulic oil temperatures are associated with their corresponding water temperatures.

In the compensation value data table, a plurality of the compensation values for the target flow rate gradient are stored in a manner to be associated with the accelerator pedal angle. In this exemplary embodiment, a plurality of compensation ratios R1 and R2 are respectively provided at every accelerator pedal angle and stored as the compensation value data table, the compensation ratio R1 compensating for decreasing the target flow rate gradient when the accelerator pedal angle is larger than a predetermined value and the compensation ratio R2 compensating for increasing the target flow rate gradient when the accelerator pedal angle is smaller than the determined value.

In Fig. 2 again, the reference temperature selector 52 converts the hydraulic oil temperatures obtained by the hydraulic oil sensors 7 to 9 into water temperatures respectively according to the temperature conversion data table stored in the storage unit 51, and selects the highest temperature as a reference temperature among the water temperatures and a cooling-water temperature obtained by the cooling-water temperature sensor 6.
The compensation value setting unit 53 sets a compensation value of the target flow rate based on the accelerator pedal angle signal. In this exemplary embodiment, the compensation value setting unit 53 sets a compensation ratio R for the target flow rate gradient as the compensation value according to the compensation value data table stored in the storage unit 51 and the accelerator pedal angle.

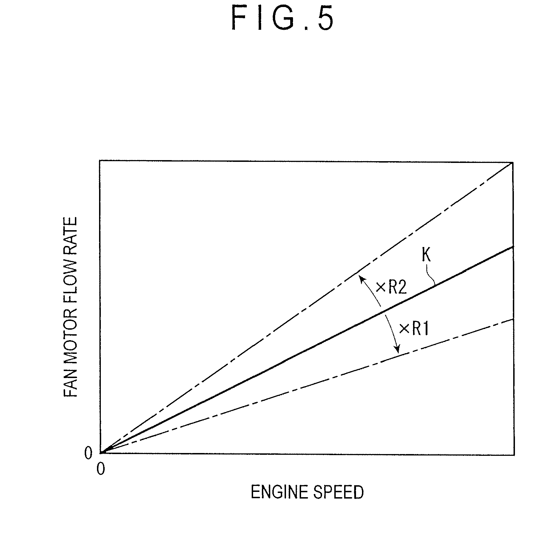

The target flow rate setting unit 54 includes a target flow rate gradient setting section 541 and a target flow rate setting section 542. The target flow rate gradient setting section 541 sets a target flow rate gradient K at the reference temperature (see Fig. 5) by interpolating between target flow rate gradients KL (lower temperatures) and KH (higher temperatures) based on the reference temperature selected by the reference temperature selector 52. Accordingly, the deceleration ratio of the fan motor 43 to the engine speed is set. The target flow rate setting section 542 sets a pre-compensation target flow rate based on the calculated target flow rate gradient K and the engine speed. Specifically, the target flow rate setting section 542 multiplies the calculated target flow rate gradient K by the engine speed to provide the pre-compensation target flow rate.

A compensation prevention unit 55 judges whether a vehicle speed obtained by the vehicle speed sensor 11 is equal to or lower than a predetermined speed, and prevents a compensation of the target flow rate when it is judged that the vehicle speed is equal to or lower than the predetermined speed.
A target flow rate compensation unit 56 compensates the pre-compensation target flow rate set by the target flow rate setting unit 54 with the compensation value set by the compensation value setting unit 53. Specifically, the target flow rate compensation unit 56 compensates the target flow rate by multiplying the target flow rate with the compensation ratio R according to the accelerator pedal angle.
The upper limit flow rate setting unit 57 sets an upper limit of the target flow rate based on the upper limit flow rate data table and the accelerator pedal angle.

The control command generator 58 generates/outputs a control command to the fan pump 42 based on the target flow rate, the upper limit flow rate, the engine speed and the judgment result of the compensation prevention unit 55. Specifically, when the compensation prevention unit 55 determines prevention of the compensation, the control command generator 58 selects a smaller value between the pre-compensation target flow rate and the reference upper limit flow rate N; generates a control command corresponding to the selected flow rate; and outputs the control command to the fan pump 42. When the compensation prevention unit 55 determines the compensation, the control command generator 58 selects a smaller value between a compensated target flow rate and the upper limit flow rate set based on the accelerator pedal angle and the upper limit flow rate data table; generates a control command corresponding to the selected one of the flow rates; and outputs the control command to the fan pump 42.

### 1-3 Advantages of Controller 5

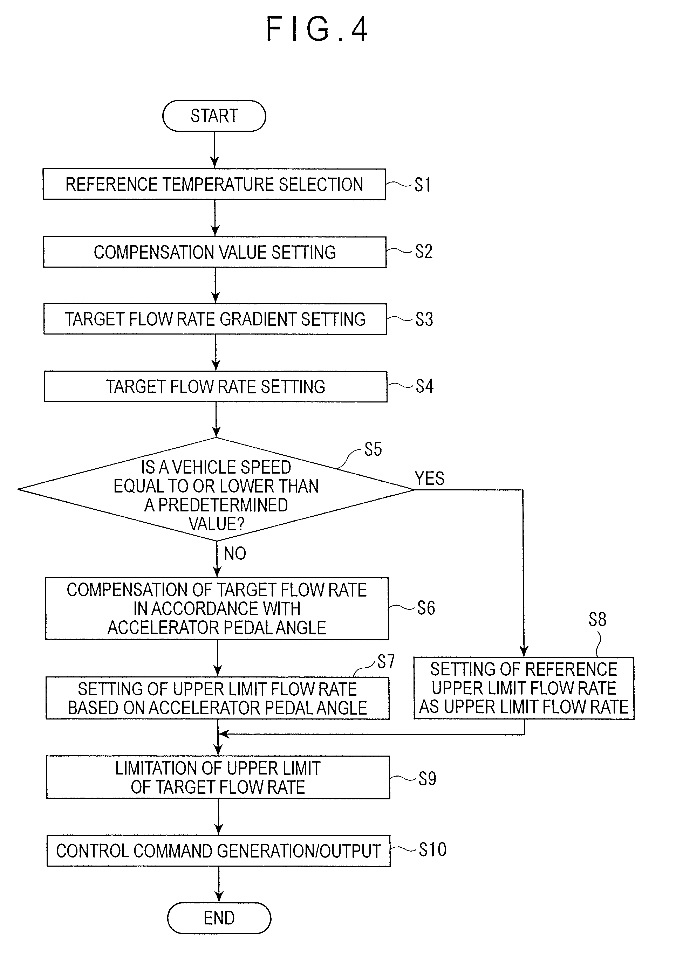

Next, advantages of controller 5 will be explained based on the flow chart shown in Fig. 4.
Firstly, the controller 5 reads signals from sensors 6 to 12 respectively. Subsequently, the reference temperature selector 52 converts the hydraulic oil temperatures into the water temperatures respectively according to the temperature conversion data table, and selects the highest temperature as the reference temperature among the water temperatures and the temperature of the cooling water (Step S 1).

Next, the compensation value setting unit 53 sets the compensation ratio R of the target flow rate based on the accelerator pedal angle signal (Step S2).
The target flow rate setting unit 54 sets the target flow rate gradient K of the fan motor 43 to the engine speed for the reference temperature by interpolating between the target flow rate gradients KL (lower temperatures) and KH (higher temperatures) with the reference temperature (Step S3). The target flow rate setting unit 54 multiplies the target flow rate gradient K by the engine speed to provide the pre-compensation target flow rate (Step S4).

Subsequently, the compensation prevention unit 55 judges whether the vehicle speed is equal to or lower than the predetermined speed (Step S5). When the compensation prevention unit 55 judges as the vehicle speed being higher than the predetermined speed, the target flow rate compensation unit 56 compensates the target flow rate by multiplying the target flow rate with the compensation ratio R according to the accelerator pedal angle (Step S6). In other words, the target flow rate compensation unit 56 decreases the target flow rate by compensating the target flow rate with the compensation ratio R1 when the accelerator pedal angle is larger than the predetermined value, or increases the target flow rate by compensating the target flow rate with the compensation ratio R2 when the accelerator pedal angle is not larger than the predetermined value. Such a compensation of the target flow rate corresponds to the compensation of the target flow rate gradient K of the fan motor 43 by the compensation ratios R1 and R2. Accordingly, the target flow rate compensation unit 56 compensates the target flow rate by compensating the target flow rate gradient K.

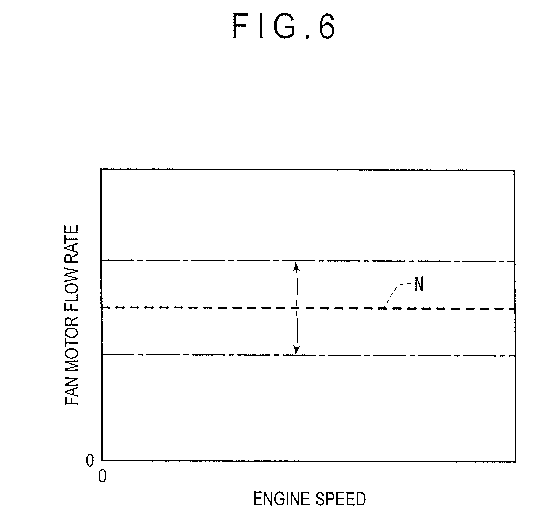

The upper limit flow rate setting unit 57 sets a final upper limit flow rate by interpolating the plurality of the upper limit flow rates stored in the upper limit flow rate data table with the accelerator pedal angle (Step S7). As shown in Fig. 6, with this arrangement, the upper limit flow rate setting unit 57 decreases the upper limit flow rate relative to the reference upper limit flow rate N when the accelerator pedal angle is larger than the predetermined value, or increases the upper limit flow rate relative to the reference upper limit flow rate N when the accelerator pedal angle is not larger than the predetermined value.

On the other hand, when it is judged in Step S5 as the vehicle speed being equal to or lower than the predetermined speed, the compensation by the target flow rate compensation unit 56 is prevented and the pre-compensation target flow rate is used without any compensation. The upper limit flow rate setting unit 57 sets the reference upper limit flow rate N as the upper limit flow rate without setting the upper limit flow rate in accordance with the accelerator pedal angle (Step S8).

As shown in Fig. 3, the control command generator 58 limits the target flow rate below the upper limit flow rate; sets the limited target flow rate as the final target flow rate; generates a control command corresponding to the final target flow rate; and outputs the control command to the fan pump 42 (Step S9).

In the dump truck 1 with the above arrangement, the fan drive control device 100 compensates the upper limit flow rate of the fan motor 43 driving the fan 41 in view of the accelerator pedal angle. With this compensation, the fan drive control device 100 decreases or increases the rotation speed of the fan motor 43 in accordance with the accelerator pedal angle, thereby actively performing the cooling while preventing decrease in travelling performance owing to the rotation of the fan 41.

### Second Exemplary Embodiment

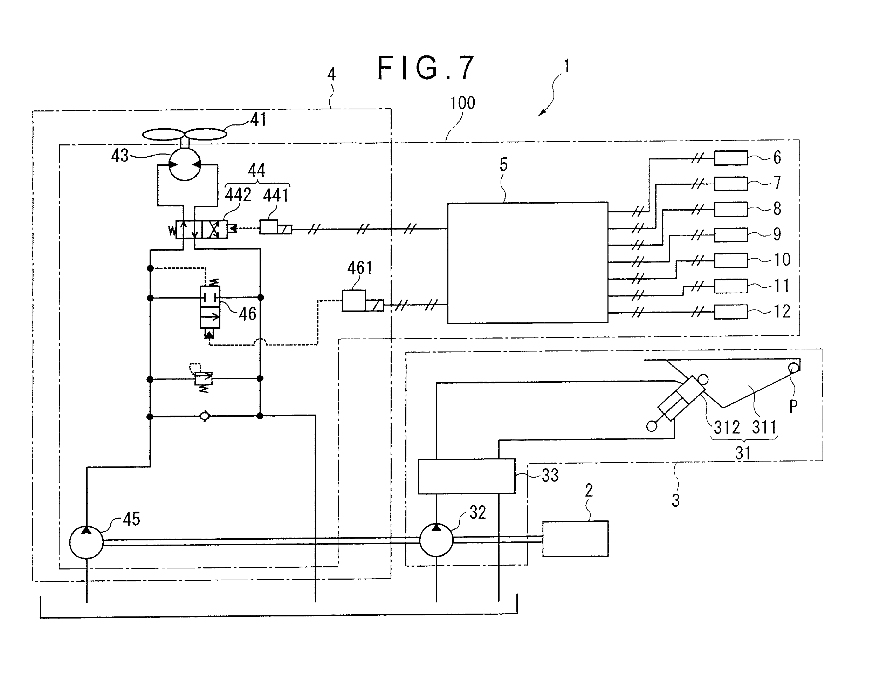

Next, a second exemplary embodiment of the invention will be described below based on Fig. 7.
The variable displacement fan pump 42 is used in the above-mentioned first exemplary embodiment, in which the inflow rate of the hydraulic oil to the fan motor 43 is adjusted by altering the discharge rate of the fan pump 42 to control the rotation speed of the fan 41.
In contrast to the above, as shown in Fig. 7, a fixed displacement fan pump 45 is used in the second exemplary embodiment, in which the inflow rate to the fan motor 43 is adjusted by a flow control valve 46 of variable flow rate to control the rotation speed of the fan 41.

The flow control valve 46 is positioned so as to bypass a suction side and a discharge side of the fan motor 43. A electromagnetic proportional valve 461 is provided in a pilot line for switching the flow control valve 46. The electromagnetic proportional valve 461 is linearly driven according to the control command from the controller 5 to alter the flow rate of the flow control valve 46. The flow control valve 46 and the electromagnetic proportional valve 461 constitute a flow rate adjuster of this exemplary embodiment.

As shown in Fig. 7, the controller 5 is electrically connected to the electromagnetic proportional valve 461 on an output side in place of the regulator 422 driving the displacement altering section 421 of the fan pump 42. The control command generator 58 limits the target flow rate below the upper limit flow rate according to the judgment result of the compensation prevention unit 55; generates a control command corresponding to the target flow rate; and outputs the control command to the electromagnetic proportional valve 461. The other components of the controller 5 are basically the same as in the first exemplary embodiment.

In the dump truck 1 with the above structure, the fan drive control device 100 includes the controller 5, temperature sensors 6 to 9, the engine speed sensor 10, the vehicle speed sensor 11, the accelerator pedal angle sensor 12, the fan motor 43, the fan pump 45 and the flow control valve 46. Also in the fan drive control device 100 of this exemplary embodiment, the controller 5 alters the control command to the electromagnetic proportional valve 461, thereby adjusting the flow rate of the flow control valve 46. With this arrangement, the inflow rate of the hydraulic oil to the fan motor 43 can be changed, so that the rotation speed of the fan motor 43 is controllable. Consequently, the same advantages can be obtained by the fan drive control device 100 of this exemplary embodiment as in the above first exemplary embodiment.

### Third Exemplary Embodiment

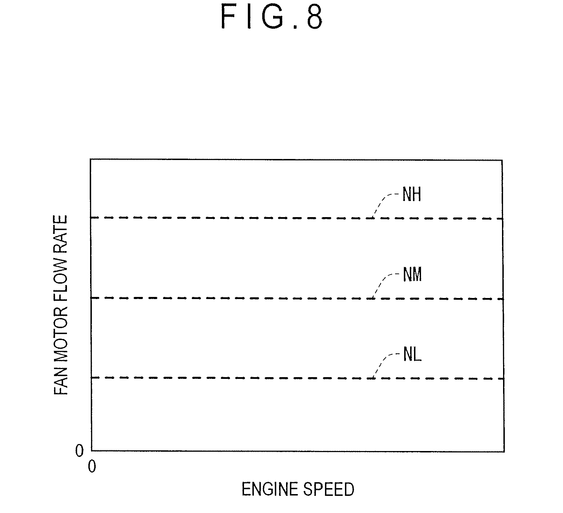

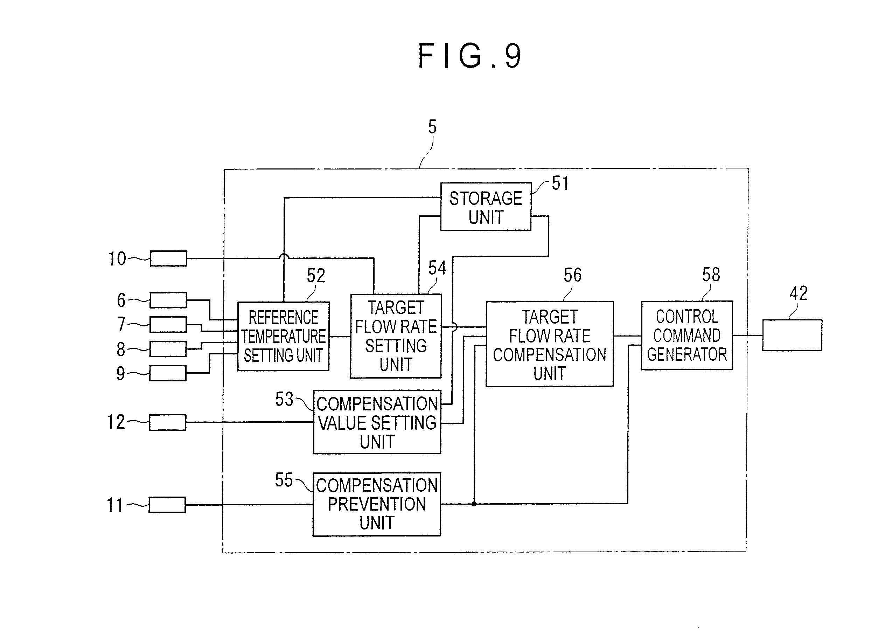

Next, a third exemplary embodiment of the invention will be described below based on Figs. 8 and 9.
In the above first and second exemplary embodiments, the target flow rate gradient map showing the fixed target flow rate gradient at each of the temperatures of the fluid to be cooled is used for setting the target flow rate, and the target flow rate is compensated by the compensation ratio R.
In contrast, as shown in Fig. 8, in the third exemplary embodiments, the target flow rate map showing the fixed target flow rate at each of the temperatures of the fluid to be cooled is used for setting the target flow rate and the target flow rate is compensated by the compensation ratio R, which is different from the above exemplary embodiments.

Accordingly, the target flow rate gradient setting section 541, which is provided in the first and second exemplary embodiments, is not required. Since the upper limit flow rate setting unit 57 is not necessarily required, the controller of this exemplary embodiment is not provided with the upper limit flow rate setting unit 57. Specifically, as shown in Fig. 9, the controller 5 includes the storage unit 51, the reference temperature selector 52, the compensation value setting unit 53, the target flow rate setting unit 54, the compensation prevention unit 55, the target flow rate compensation unit 56, and the control command generator 58.

In this exemplary embodiment, the storage unit 51 stores the temperature conversion data table and the compensation value data table as in the first and second exemplary embodiments. The storage unit 51 also stores the target flow rate map in place of the target flow rate gradient map. As shown in Fig. 8, the target flow rate map stores the fixed target flow rate at each of the temperature irrespective of the engine speed. In this exemplary embodiment, the target flow rate NL at lower temperatures of the fluid to be cooled, the target flow rate NH at higher temperatures thereof, and a target flow rate NM at medium temperatures between the lower temperatures and the higher temperatures are stored as the target flow rate map.

The target flow rate setting unit 54 sets the target flow rate by interpolating between the target flow rates NL, NM and NH with the reference temperature.
The control command generator 58 does not limit the target flow rate below the upper limit flow rate. However, the control command generator 58 generates the control command corresponding to the target flow rate based on the final target flow rate set in accordance with the judgment of the compensation prevention unit 55 and the engine speed and outputs the control command to the flow rate adjuster, which is the same as in the first and second exemplary embodiments.
In this exemplary embodiment, which is different from the first and second exemplary embodiments, the upper limit flow rate data table is not stored. However, for instance, only the reference upper limit flow rate N may be made to be stored among the upper limit flow rates of the upper limit flow rate data table to limit the compensated target flow rate.

As described above, in the fan drive control device 100 of this exemplary embodiment, the target flow rate gradient map, the target flow rate gradient setting unit and the upper limit flow rate setting unit can be omitted contrary to the arrangements of the first and second exemplary embodiments. Accordingly, with decrease in calculation load of the controller 5, the structure of the controller 5 can be simplified. Consequently, in addition to the same advantages as those in the first and second exemplary embodiments, the production cost of the entirety of the fan drive control device 100 can be reduced. This exemplary embodiment is suitable for a hydraulic excavator and a bulldozer in which a change in the engine speed and, consequently, a change in the fan rotation speed are small during operation.

The scope of the present invention is not limited to the above-described embodiments, but includes modifications and improvements as long as an object of the present invention can be achieved.
For instance, each of the above exemplary embodiments describes: setting the target flow rate of the hydraulic oil flowed into the fan motor 43 for rotating the fan based on detected values by the temperature sensors 6 to 9; compensating the target flow rate based on a detected value by the accelerator pedal angle sensor 12; and generating the control command to the flow rate adjuster. However, the arrangement of the invention is not limited to this. A target rotation speed of the fan 41 may be used for the control in place of the target flow rate of the hydraulic oil flowed into the fan motor 43. Specifically, the control command to the flow rate adjuster may be generated by setting the target rotation speed of the fan 41 based on the detected values by the temperature sensors 6 to 9 and by compensating the target rotation speed based on the detected value by the accelerator pedal angle sensor 12. Since the target rotation speed of the fan 41 is one of the replacements of the target flow rate of the fan motor 43, the same advantages can be obtained as in the above exemplary embodiments even in such a case.

In the above exemplary embodiments, the target flow rate is decreased when the accelerator pedal angle is larger than the predetermined value and otherwise the target flow rate is increased, which is subjected to no specific limitation. For instance, either decreasing or increasing may be performed as needed.
In the above exemplary embodiment, the compensation ratio to the target flow rate gradient or the target flow rate is stored, but the arrangement is not limited to this. For instance, a compensation amount to the target flow rate gradient or the target flow rate may be stored to be added to or subtracted from the target flow rate gradient or the target flow rate in accordance with the accelerator pedal angle.

In the first and second exemplary embodiments, the target flow rate gradients KL and KH respectively at lower and higher temperatures are stored in the storage unit 51 and interpolation between the target flow rate gradients KL and KH is performed to calculate the target flow rate gradient K, but the arrangement is not limited to this. For instance, the target flow rate gradients at the lower, medium and higher temperatures may be stored and interpolation therebetween may be performed. Alternatively, a larger number of the target flow rate gradients may be stored and interpolation therebetween may be performed.

Similarly, in the third exemplary embodiment, the target flow rates NL, NM and NH respectively at lower, medium and higher temperatures are stored as the target flow rate map and interpolation between the target flow rates NL, NM and NH is performed to calculate the target flow rate of the fan motor 43, but the arrangement is not limited to this. A larger number of the target flow rates may be stored and interpolation therebetween may be performed.

In the first and second exemplary embodiments, the upper limit flow rate data table, which shows the relation between a plurality of the upper limit flow rates including the reference upper limit flow rate N and the accelerator pedal angle, is stored and the upper limit flow rate is set by interpolation between the upper limit flow rates stored in the upper limit flow rate data table based on the accelerator pedal angle, but the arrangement is not limited to this. For instance, the compensation ratio to the reference upper limit flow rate N may be stored for each accelerator pedal angle and the compensation ratio is multiplied by the reference upper limit flow rate N to set the upper limit flow rate.

In the first and second exemplary embodiments, the target flow rate gradient K is compensated in accordance with the accelerator pedal angle and the upper limit flow rate is set in accordance with the accelerator pedal angle, but the arrangement is not limited to this. For instance, without setting the upper limit flow rate in accordance with the accelerator pedal angle, the reference upper limit flow rate N may be set as the upper limit flow rate to limit the target flow rate.

The third exemplary embodiment does not include the upper limit flow rate setting unit 57 since the target flow rate is set by using the target flow rate map showing the fixed target flow rate at each of the temperature of the fluid to be cooled. However, the upper limit flow rate setting unit 57 may be provided. In other words, the upper limit flow rate data table may be stored and used for limiting the upper limit of the target flow rate below the upper limit flow rate.

In the first and second exemplary embodiments, after selecting the reference temperature, the target flow rate gradient K corresponding to the reference temperature is set for the pre-compensation target flow rate, but the arrangement is not limited to this. For instance, the target flow rate gradient K and the target flow rate may be respectively set at each of the hydraulic oil temperatures obtained by the hydraulic oil temperature sensors 7 to 9 and at cooling-water temperature obtained by the cooling-water temperature sensor 6 and then one of the target flow rate gradients K and the target flow rates may be selected as the pre-compensation target flow rate. In this case, the controller 5 is not required to include the reference temperature selector 52. The temperatures detected by the temperature sensors 6 to 9 in addition to the engine speed detected by the engine speed sensor 10 are input to the target flow rate setting unit 54. The storage unit 51 is not required to store the temperature conversion data table, but is required to store the target flow rate gradient map in which the target flow rate gradients KL and KH at lower and higher temperatures are respectively and independently associated with the predetermined temperature of the hydraulic oil and the predetermined temperature of the cooling water.

In the controller 5 with such an arrangement, firstly, the target flow rate setting unit 54 sets the target flow rate gradient K at each of the hydraulic oil temperatures and the cooling-water temperature by interpolating between the lower-temperature target flow rate gradient KL and the higher-temperature target flow rate gradient KH at respective temperatures of the hydraulic oils and the cooling water. Next, the target flow rate setting unit 54 calculates the target flow rates at each of the hydraulic oil temperatures and the cooling-water temperature by multiplying the respective target flow rate gradients K by the engine speed. Among the calculated target flow rates, the highest rotation speed is set as the pre-compensation target flow rate. Subsequently, the same processing steps as those of Steps S5 and the following steps of Fig. 4 in the first exemplary embodiment are taken. Also in the fan drive control device 100 with such an arrangement, the same advantages as in the first and second exemplary embodiment can be obtained.

In the above exemplary embodiments, the compensation prevention unit 55 judges whether the vehicle speed obtained by the vehicle speed sensor 11 is equal to or lower than the predetermined speed to prevent the compensation of the target flow rate, but the arrangement is not limited to this. For instance, a switch operable by an operator may be provided and it may be judged whether the switch is open or closed, thereby preventing the compensation of the target flow rate.

In the above exemplary embodiments, the present invention is applied to the dump truck 1, but is not limited thereto. For instance, the present invention may be applied to other construction machines such as a wheel loader, a bulldozer, a hydraulic excavator and the like.

### Industrial Applicability

The present invention is applicable to construction machines and any travelling vehicles provided with a cooling fan driven by a hydraulic motor with an engine serving as a power source.

## Claims

1. A fan drive control device for controlling a drive of a cooling fan of a construction machine, comprising:
a hydraulic motor that drives the cooling fan by a hydraulic oil supplied from a hydraulic pump driven by an engine;
a flow rate adjuster that adjusts a flow rate of the hydraulic oil flowed into the hydraulic motor;
a temperature sensor that detects a temperature of a fluid to be cooled by the cooling fan;
an accelerator pedal angle sensor that detects an accelerator pedal angle for controlling a power of the engine;
a target flow rate setting unit that sets a target flow rate of the hydraulic oil flowed into the hydraulic motor based on a detected value by the temperature sensor;
a target flow rate compensation unit that compensates the target flow rate based on a detected value by the accelerator pedal angle sensor; and
a control command generator that generates a control command to the flow rate adjuster in accordance with the target flow rate compensated by the target flow rate compensation unit.

2. The fan drive control device according to claim 1, wherein
the target flow rate compensation unit decreases the target flow rate when the accelerator pedal angle is larger than a predetermined value and increases the target flow rate when the accelerator pedal angle is smaller than the predetermined value.

3. The fan drive control device according to claim 1, further comprising:
an engine speed sensor that detects an engine speed; and
a storage unit that stores a plurality of target flow rate gradients corresponding to a plurality of the temperatures, each of the target flow rate gradients being fixed at each of the temperatures and representing a ratio of the target flow rate to the engine speed, wherein
the target flow rate setting unit sets the target flow rate gradient based on the detected value by the temperature sensor and a stored value in the storage unit and sets the target flow rate based on the target flow rate gradient and a detected value by the engine speed sensor, and
the target flow rate compensation unit compensates the target flow rate by compensating the target flow rate gradient.

4. The fan drive control device according to claim 1, further comprising:
a storage unit that stores a plurality of target flow rates corresponding to a plurality of temperatures, each of the target flow rates being fixed irrespective of the engine speed, wherein
the target flow rate setting unit sets the target flow rate based on the detected value by the temperature sensor and a stored value in the storage unit, and
the target flow rate compensation unit compensates the target flow rates that are fixed at each of the temperatures.

5. The fan drive control device according to claim 1, further comprising:
a vehicle speed sensor that detects a vehicle speed of the construction machine; and
a compensation prevention unit that prevents a compensation of the target flow rates when the vehicle speed is equal to or lower than a predetermined value.

6. The fan drive control device according to any one of claims 1 to 5, wherein
the hydraulic pump is a variable displacement pump, and
the flow rate adjuster adjusts a flow rate of the hydraulic oil discharged from the hydraulic pump by altering a displacement of the hydraulic pump.

7. The fan drive control device according to any one of claims 1 to 5, wherein
the hydraulic pump is a fixed displacement pump, and
the flow rate adjuster is provided with a flow control valve bypassing between a suction side and a discharge side of the hydraulic motor and adjusts a flow rate of the hydraulic oil bypassing the hydraulic motor.

8. A construction machine, comprising:
a cooling fan; and
the fan drive control device according to any one of claims 1 to 5.

9. A construction machine, comprising:
a cooling fan; and
the fan drive control device according to claim 6.

10. A construction machine, comprising:
a cooling fan; and
the fan drive control device according to claim 7.
